Europäisches Patentamt

European Patent Office

Office européen des brevets

(19)

(11) Numéro de publication : **0 290 546 B1**

(12) **FASCICULE DE BREVET EUROPEEN**

(45) Date de publication du fascicule du brevet :
06.03.91 Bulletin 91/10

(51) Int. Cl.⁵ : **B23Q 1/08, B23Q 11/00**

(21) Numéro de dépôt : 87907621.4

(22) Date de dépôt : 13.11.87

(86) Numéro de dépôt international :
PCT/FR87/00448

(87) Numéro de publication internationale :
WO 88/03458 19.05.88 Gazette 88/11

(54) BROCHE PORTE-PIECE A PALIERS MAGNETIQUES ET DISPOSITIFS DE MISE EN OEUVRE DE CELLE-CI POUR MACHINE-OUTIL DE TRES HAUTE PRECISION.

(30) Priorité : 13.11.86 FR 8615762

(43) Date de publication de la demande :
17.11.88 Bulletin 88/46

(45) Mention de la délivrance du brevet :
06.03.91 Bulletin 91/10

(84) Etats contractants désignés :
CH DE GB IT LI SE

(56) Documents cités :
FR-A- 2 506 198
US-A- 2 924 768
US-A- 3 090 896
US-A- 3 618 432

(73) Titulaire : SOCIETE EUROPEENNE DE
PROPULSION
24 rue Salomon de Rothschild
F-92150 Suresnes (FR)

(72) Inventeur : FOUCHE, Claude
5, rue de la Dîme
Giverny F-27620 Gasny (FR)

(74) Mandataire : Thévenet, Jean-Bruno et al
Cabinet BEAU DE LOMENIE 55 rue
d'Amsterdam
F-75008 Paris (FR)

## Description

La présente invention a pour objet une broche porte-pièce à paliers magnétiques actifs pour machine-outil de très haute précision, comprenant un corps de broche monté sur une glissière de guidage selon une direction prédéterminée, un rotor de broche monté à l'intérieur du corps de broche et un mandrin solidaire du rotor de broche, des premier et second paliers magnétiques actifs radiaux de support du rotor de broche, commandés au moins à partir de détecteurs radiaux de la position du rotor, une butée axiale constituée par un palier magnétique actif axial coopérant avec un disque solidaire du rotor de broche, et commandé à partir d'au moins un détecteur axial de la position du rotor, et un moteur électrique d'entraînement en rotation du rotor de broche.

L'invention concerne également des dispositifs de mise en oeuvre d'une telle broche pour des machines de haute précision afin de faciliter l'usinage précis de surfaces complexes en coordonnées cartésiennes ou en coordonnées polaires.

Les machines-outils de haute précision utilisent une broche porte-pièce montée sur une glissière généralement commandée par un système vis-écrou associé à un moteur électrique à courant continu dont le rotor est couplé directement à la vis d'entraînement de la glissière. Le rotor de la broche sur lequel est fixée la pièce est monté dans la broche à l'aide de paliers à air qui confèrent au rotor de broche une raideur élevée.

L'utilisation de paliers à air impose la réalisation d'entrefers très réduits, de l'ordre de 5 μm entre le rotor de broche et le corps de broche. Ceci ne permet pas d'éviter des mouvements résiduels de perturbation au niveau du rotor de broche qui limitent la précision d'autant plus que les défauts des glissières ne peuvent jamais être totalement éliminés.

On a déjà proposé de réaliser la rectification de pièces montées sur des paliers magnétiques actifs afin d'obtenir une grande précision et une grande stabilité dans le contrôle de la rotation de la pièce. Ceci implique cependant de disposer de paliers magnétiques amovibles et ne peut s'appliquer qu'à la réalisation de pièces d'une certaine géométrie.

On connait par ailleurs par le brevet US-A-4 180 946 correspondant au brevet français FR-A-2 326 270 une broche porte-outil, notamment pour rectifieuse, dont l'arbre est monté dans des paliers magnétiques actifs radiaux, et qui comporte un moteur électrique d'entraînement incorporé dans le corps de la broche et situé entre les deux paliers radiaux d'extrémité. Une telle broche porte-outil présente une certaine souplesse d'utilisation pour effectuer un certain nombre d'opérations d'usinage, mais n'est pas adaptée pour être incorporée dans l'architecture d'une machine-outil de très haute précision. De plus, la présence d'un moteur électrique intégré dans le corps de la broche et disposé entre les deux paliers radiaux augmente les dégagements de chaleur et les vibrations au niveau de la suspension magnétique et amène une pollution électrique et magnétique des différents détecteurs servant à l'asservissement des paliers magnétiques, de sorte que la commande du mouvement de l'outil reste d'une précision limitée.

La présente invention vise à remédier aux inconvénients précités et à permetre d'effectuer des travaux d'usinage de très haute précision pour réaliser des surfaces typiques ou atypiques dont la forme générale est de révolution, en éliminant ou en corrigeant les défauts des différents ensembles mécaniques mobiles les uns par rapport aux autres pour la réalisation de surfaces complexes dans un système d'axes cartésien ou polaire.

Ces buts sont atteints grâce à une broche porte-pièce du type mentionné en tête de la description, caractérisée en ce que le moteur électrique est extérieur au corps de broche, est disposé à l'arrière du rotor de broche et sensiblement en alignement avec celui-ci,en ce que le moteur extérieur présente un entrefer plus réduit que l'entrefer entre les paliers magnétiques radiaux et le rotor de broche, en ce que la vitesse de rotation communiquée au rotor de broche par le moteur extérieur, exprimée en tours/seconde, se situe en dehors de la bande passante d'asservissement du système de suspension magnétique exprimée en hertz, en ce qu'un dispositif d'accouplement souple relie l'arbre de sortie du moteur extérieur à la partie arrière du rotor de broche en assurant le filtrage des perturbations mécaniques issues du faux-rond du moteur, et en ce que la broche comprend en outre des moyens supplémentaires de détection des mouvements de la glissière de guidage de broche et des moyens de modification sélective des tensions électriques de référence des boucles d'asservissement du palier axial et des paliers radiaux en fonction des signaux issus desdits moyens supplémentaires de détection, lesdits moyens supplémentaires de détection des mouvements de la glissière sur laquelle est placée la broche porte-pièce comprenant dans le plan d'asservissement de chaque palier radial deux détecteurs solidaires du corps de broche qui sont placés en regard de deux surfaces planes de référence disposées parallèlement à la direction du déplacement de ladite glissière, lesdits détecteurs délivrant des signaux électriques proportionnels aux variations de distance entre lesdits détecteurs et lesdites surfaces planes de référence pour commander les moyens de modification sélective en temps réel des tensions de référence des boucles d'asservissement des paliers radiaux de la broche porte-pièce en fonction desdites variations de proximité entre les détecteurs et les surfaces de référence planes.

Grâce à la combinaison d'un dispositif de support de rotor de broche à paliers magnétiques actifs, d'un moyen d'entraînement de broche extérieur au corps de broche et de moyens supplémentaires de détection, il est ainsi possible de positionner la pièce à usiner avec une précision et une stabilité améliorées tout en compensant en permanence les défauts des éléments extérieurs de réglage tels que des glissières, et en facilitant l'exécution de surfaces typiques particulières telles que des bombés ou des cannelures.

Le mandrin solidaire du rotor de broche peut être soit un plateau à aspiration muni d'orifices d'aspiration répartis sur sa face frontale, soit un plateau magnétique, soit encore une pince dite américaine, ou un mandrin mécanique.

Toutefois, selon un mode de réalisation préférentiel, le mandrin solidaire du rotor porte-broche est constitué par un plateau à aspiration muni d'orifices d'aspiration et le dispositif d'aspiration comprend une pompe à vide, un réservoir tampon d'aspiration disposé à l'arrière du moteur électrique et relié à la pompe à vide, et un conduit d'aspiration prenant naissance à l'intérieur du réservoir tampon, s'étendant axialement à l'intérieur de l'arbre du moteur, du dispositif d'accouplement et du rotor de broche pour déboucher dans une cavité formée dans le mandrin porte-pièce et avec laquelle sont en communication les orifices d'aspiration.

L'agencement du dispositif d'aspiration est simple à réaliser et empêche efficacement que des perturbations dues au pompage soient communiquées au rotor de broche.

Avantageusement, le dispositif d'accouplement comprend un manchon tubulaire étanche en une matière telle que du caoutchouc ou un élastomère.

A titre d'exemple, le moteur extérieur présente un entrefer de l'ordre de 0,1 mm tandis que l'entrefer entre les paliers magnétiques radiaux et le rotor de broche est de l'ordre de 0,3 mm.

De préférence, la fréquence propre du système de suspension magnétique est de l'ordre de 50 à 60 Hz tandis que la vitesse de rotation du rotor de broche est comprise entre environ 25 et 40 tours/seconde.

Selon une caractéristique particulière de l'invention, qui contribue à accroître la précision, la broche comprend des premier et second détecteurs raidaux espacés axialement et situés de part et d'autre dudit second palier magnétique radial avant disposé au voisinage du mandrin porte-pièce, le second détecteur radial est monté de façon amovible entre ledit second palier magnétique radial et le disque porte-pièce et dans une première phase de mise au point le second palier magnétique radial est commandé par le premier détecteur radial pour effectuer sur le rotor de broche une opération de rectification de la piste de référence du second détecteur radial et dans des phases ultérieures d'usinage de pièces supportées par le mandrin porte-pièce, le second palier magnétique radial est commandé par le second détecteur radial coopérant avec ladite piste de référence.

De façon similaire, la broche peut successivement mettre en oeuvre des premier et second détecteurs axiaux, le premier détecteur axial disposé à l'arrière de la broche servant à la commande de la butée axiale pour une opération de rectification d'une piste de référence sur une face frontale formée à l'avant de la broche, et le second détecteur axial qui coopère avec ladite piste de référence servant à la commande de la butée axiale pour une phase ultérieure d'usinage de pièce.

L'invention concerne encore un dispositif de correction des défauts (roulis, lacet, tangage et défauts de rectitude horizontale et verticale), des mouvements de glissières d'une machine-outil utilisée dans un repère cartésien et comprenant des première et seconde glissières dont les axes de déplacement sont orientés selon deux directions perpendiculaires XX' et YY', un plateau tournant placé sur la première glissière, et une broche porte-pièce placée sur la seconde glissière, et des dispositifs de mesure des déplacements des première et seconde glissières, caractérisé en ce qu'il comprend une broche porte-pièce à paliers magnétiques actifs du type susmentionné, des moyens supplémentaires de détection des mouvements de la première glissière de guidage du plateau tournant, lesdits moyens supplémentaires de détetion des mouvements de la première glissière sur laquelle est placé le plateau tournant comprenant un détecteur mobile placé dans un plan vertical contenant l'axe de l'outil et solidaire de la première glissière, une surface plane de référence placée perpendiculairement à l'axe de la broche porte-pièce et des moyens de détection des variations de l'espacement entre le détecteur et la surface plane de référence, et les moyens de modification en temps réel de la tension de référence de la boucle d'asservissement du palier axial étant commandés en fonction desdites variations de proximité entre ledit détecteur mobile solidaire de la première glissière et ladite surface de référence plane.

L'invention a encore pour objet un dispositif de correction de défauts (excentricité, voile, défaut de circularité) de rotation du plateau tournant d'une machine-outil utilisée en coordonnées polaires comprenant une première glissière de réglage, qui enjambe un plateau tournant à axe vertical sur lequel est placée une seconde glissière de réglage d'un support d'outil et une broche porte-pièce placée sur la première glissière de réglage, caractérisé en ce qu'il comprend une broche porte-pièce du type mentionné plus haut, en ce qu'il comprend en outre une surface de référence de forme sphérique centrée sur l'axe du plateau tournant et placée sur un support fixe solidaire de la table, un capteur de proximité entre le capteur et la surface de référence sphérique et des moyens de modification en temps réel de la tension de référence de la boucle d'asservissement du palier axial de la broche porte-pièce en fonction desdites variations de proximité entre le capteur et la surface de référence sphérique.

Les diverses mesures préconisées par la présente invention contribuent à l'obtention de performances qui se situent dans le domaine de la précision optique.

Ainsi, à titre d'exemple, un usinage de pièces réalisé conformément à l'invention en utilisant une broche porte-pièce montée sur paliers magnétiques asservis a permis d'obtenir des pièces cylindriques pour lesquelles les défauts de circularité ou de cylindricité sont inférieurs au dixième micromètre. En particulier, une pièce usinée de diamètre 220 mm en alliage d'aluminium AG5 présente un écart crête à crête de 0,1 micromètre et une pièce usinée de diamètre 55 mm en germanium présente un écart crête à crête de 0,089 micromètre.

Des pièces planes présentent également de très faibles défauts de planéité. Ainsi, des pièces de diamètre 105 mm en alliage d'aluminium AG5 et germanium présentent respectivement des écarts de forme par rapport au plan de $\lambda/2,3$ et $\lambda/8$ (avec $\lambda = 0,6328$ μm).

D'autres caractéristiques et avantages de l'invention ressortiront de la description suivante de modes particuliers de réalisation de l'invention, faite en référence aux dessins annexés, sur lesquels :

– la figure 1 est une vue schématique en coupe axiale d'une poupée porte-pièce selon la présente invention,
– la figure 2 est une vue de détail montrant les moyens magnétiques de support du rotor de la broche de la figure 1,
– les figures 3 et 4 sont des vues respectivement en élévation et de l'arrière d'un premier exemple de dispositif d'accouplement utilisable dans la broche de la figure 1,
– les figures 5 et 6 sont des vues en élévation d'un second et d'un troisième exemples de dispositif d'accouplement utilisable dans la broche de la figure 1,
– la figure 7 est une vue schématique de dessus d'une machine à usiner dans un système d'axes en coordonnées orthogonales,
– les figures 8 et 9 sont des vues respectivement de dessous et en élévation d'un exemple de machine à usiner de très haute précision dans un système d'axes cartésiens utilisant la broche de la figure 1,
– la figure 10 est une vue schématique de dessus d'une machine à usiner dans un système d'axes en coordonnées polaires,
– les figures 11 et 12 sont des vues respectivement de dessus et en élévation d'un exemple de machine à usiner de très haute précision dans un système d'axes en coordonnées polaires utilisant la broche de la figure 1,
– la figure 13 est une vue schématique dans le plan d'asservissement du palier radial avant supportant le rotor de la broche de la figure 1,
– la figure 14 est une vue schématique, dans le plan de la figure 9, d'une partie de la machine à usiner supportant l'outil,
– les figures 15 et 16 sont des vues schématiques respectivement de dessus et dans le plan XVI-XVI de la figure 15, d'une partie de la machine à usiner des figures 8 et 9 selon une variante de réalisation,
– la figure 17 est une vue schématique de dessus d'une partie d'une machine à usiner en coordonnées polaires montrant la présence d'une surface sphérique de référence, et
– la figure 18 est une vue schématique de dessus d'une partie d'une machine à usiner en coordonnées cartésiennes montrant la présence d'une surface sphérique de référence.

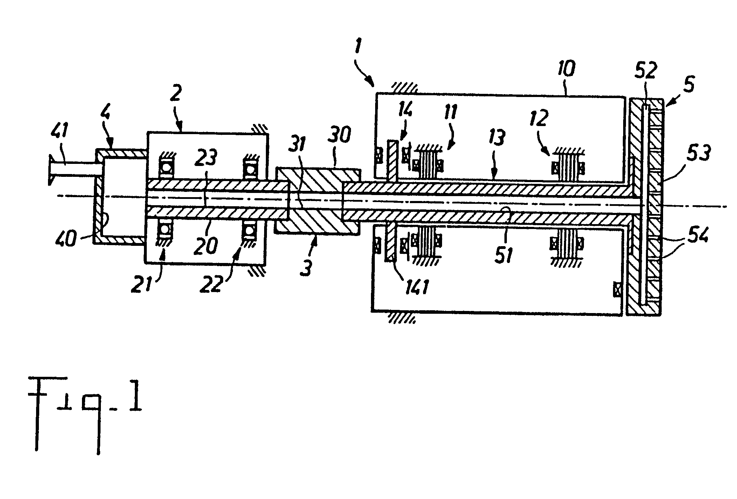

La figure 1 montre de façon schématique la structure d'ensemble d'une broche porte-pièce 1 prévue pour être montée sur une glissière d'une machine à usiner de haute précision.

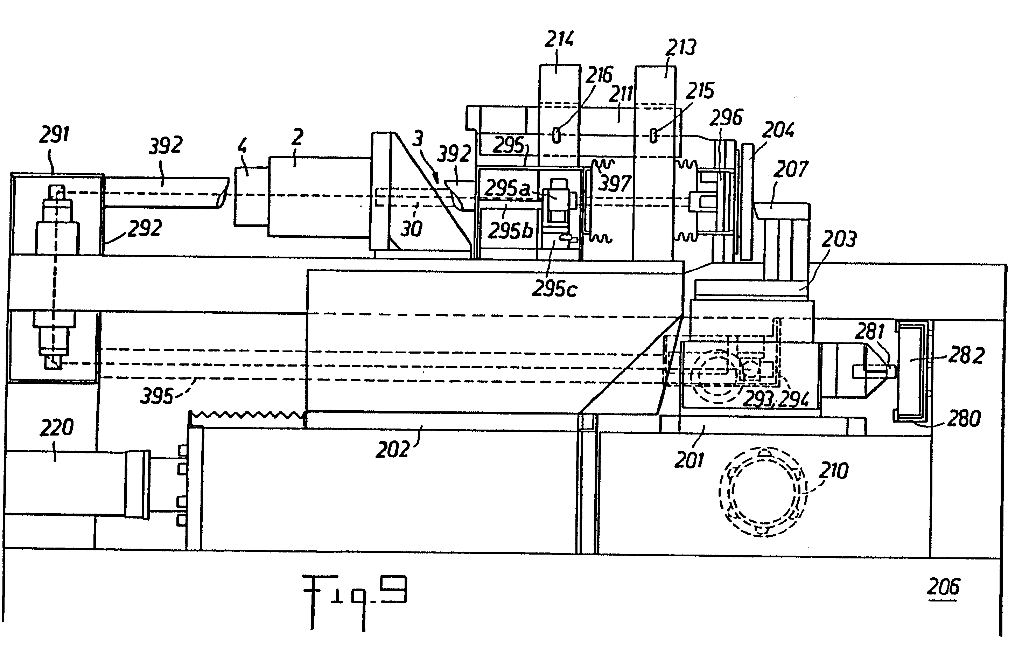

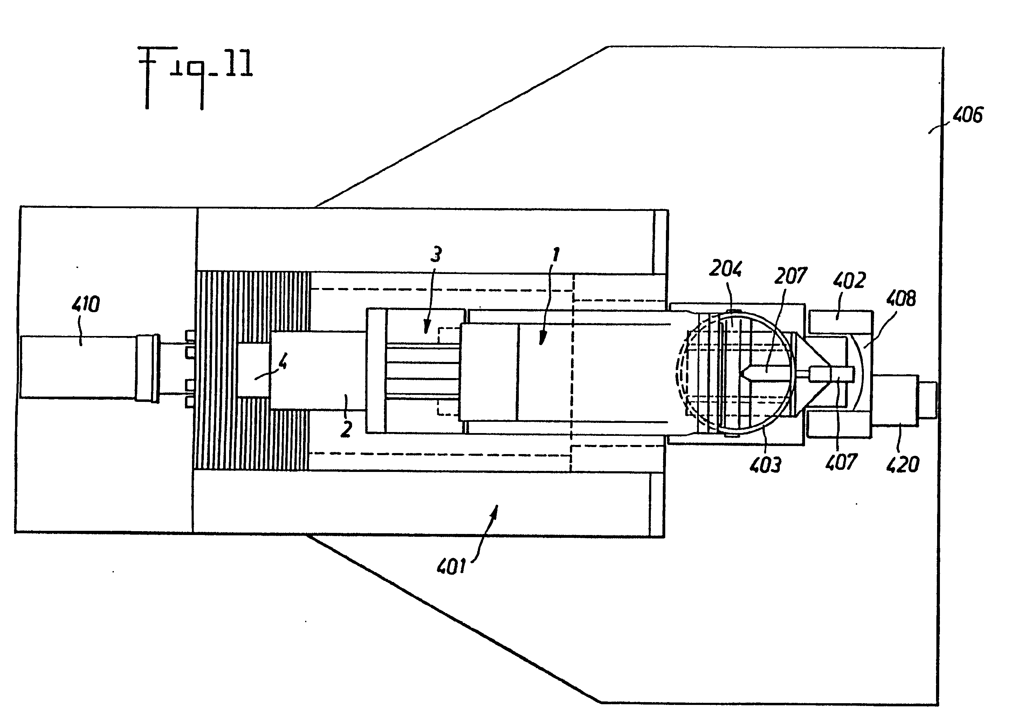

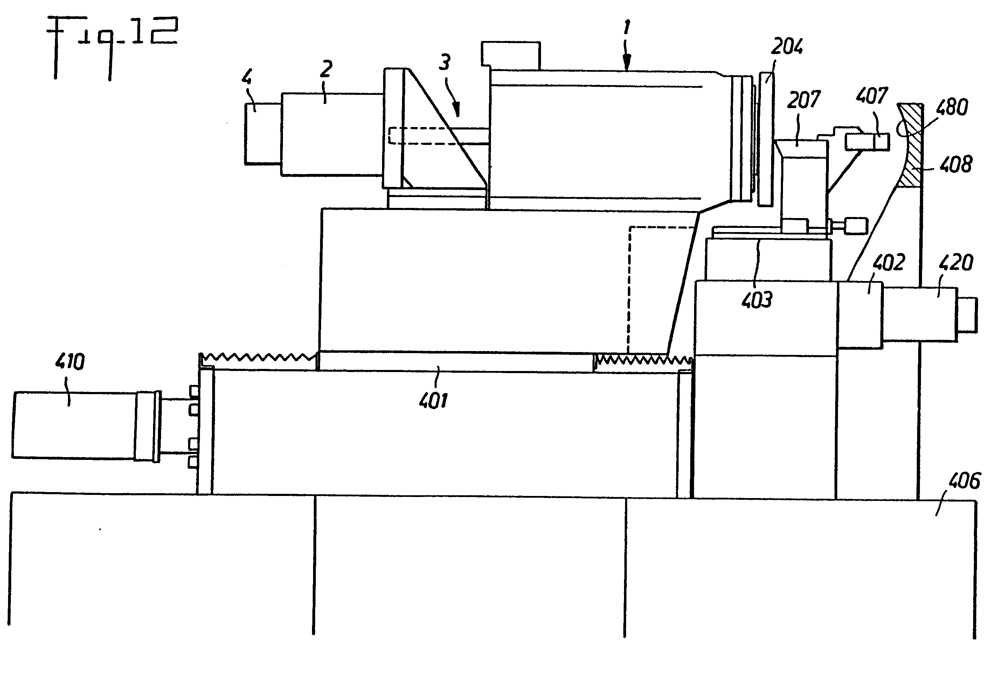

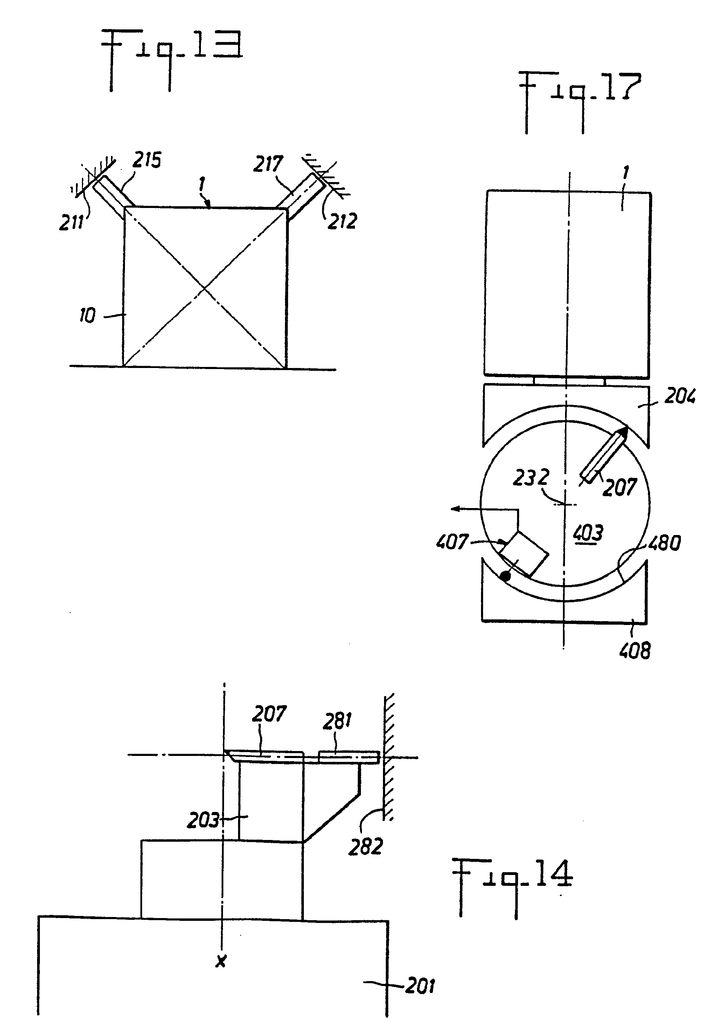

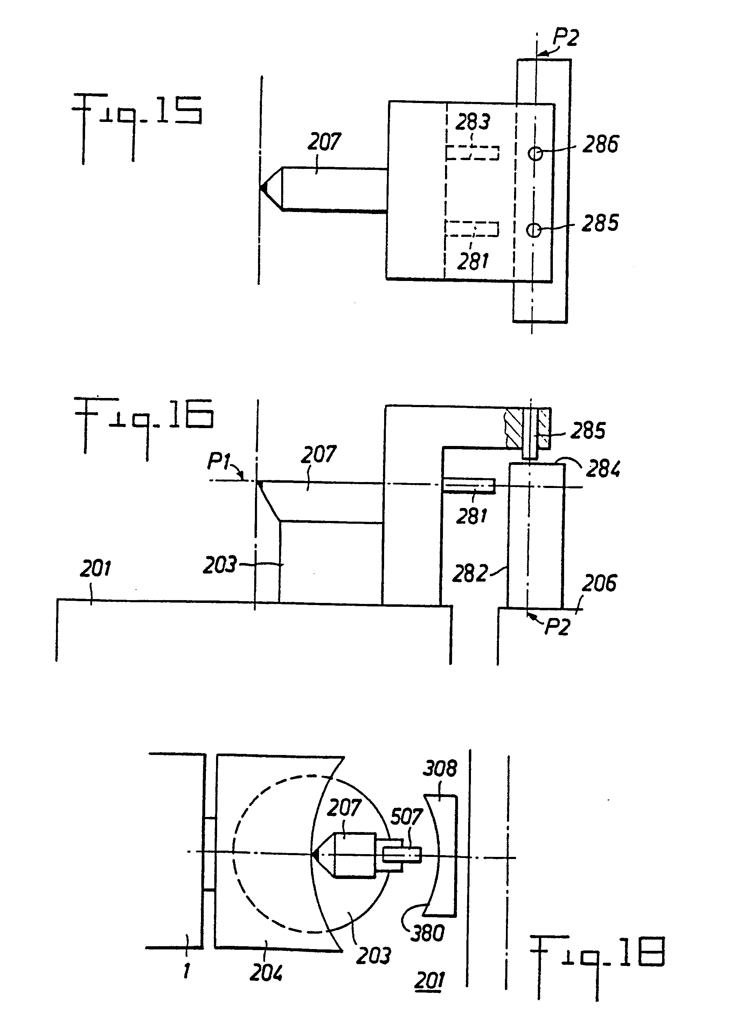

La broche 1 comprend un corps de broche 10 rendu solidaire d'une glissière de réglage, telle que la glissière référencée 202 sur les figures 8 et 9 et 401 sur les figures 11 et 12. Le corps de broche 10 sert de logement pour les éléments statoriques d'un palier magnétique radial avant 12 et d'un palier magnétique radial arrière 11 qui définissent avec le rotor 50 de la broche 1 un entrefer 13 relativement important, de l'ordre de 0,3 mm. Le corps de broche 10 incorpore également des éléments statoriques de palier magnétique axial qui coopèrent avec un disque 141 solidaire de la partie arrière du rotor de broche 50, et perpendiculaire à l'axe de ce dernier, pour constituer une butée axiale.

Le rotor de broche 50 se termine à sa partie avant par un mandrin porte-pièce 5 fixé sur l'axe de la broche 1 et présente un diamètre supérieur à celui du rotor de broche 50. Dans le cas préférentiel, tel que représenté sur la figure 1, où le mandrin 5 est un plateau à aspiration, le mandrin porte-pièce 5 présente une cavité 52 qui est en communication avec un conduit 51 ménagé axialement à l'intérieur du rotor de broche 50. Des orifices 54 sont répartis dans la face frontale 53 du disque porte-pièce 5 et débouchent dans la cavité 52 pour assurer, par aspiration, le maintien d'une pièce à usiner en contact avec la face frontale 53 du disque porte-pièce 5.

Le rotor 50 de la broche 1 est entraîné en rotation à partir d'un moteur électrique 2 qui est extérieur au corps de broche 10 et comprend un rotor 20 pouvant être monté sur des roulements à billes de précision 21, 22, sur des rouleaux coniques ou encore sur des paliers magnétiques. Le moteur extérieur 2 est conçu de manière à ne pas avoir un faux rond supérieur à quelques micromètres.

L'arbre de broche 50 et le rotor 20 du moteur extérieur 2 sont reliés par un accouplement 3 destiné à assurer la transmission du couple moteur tout en filtrant les perturbations mécaniques issues du faux rond du moteur.

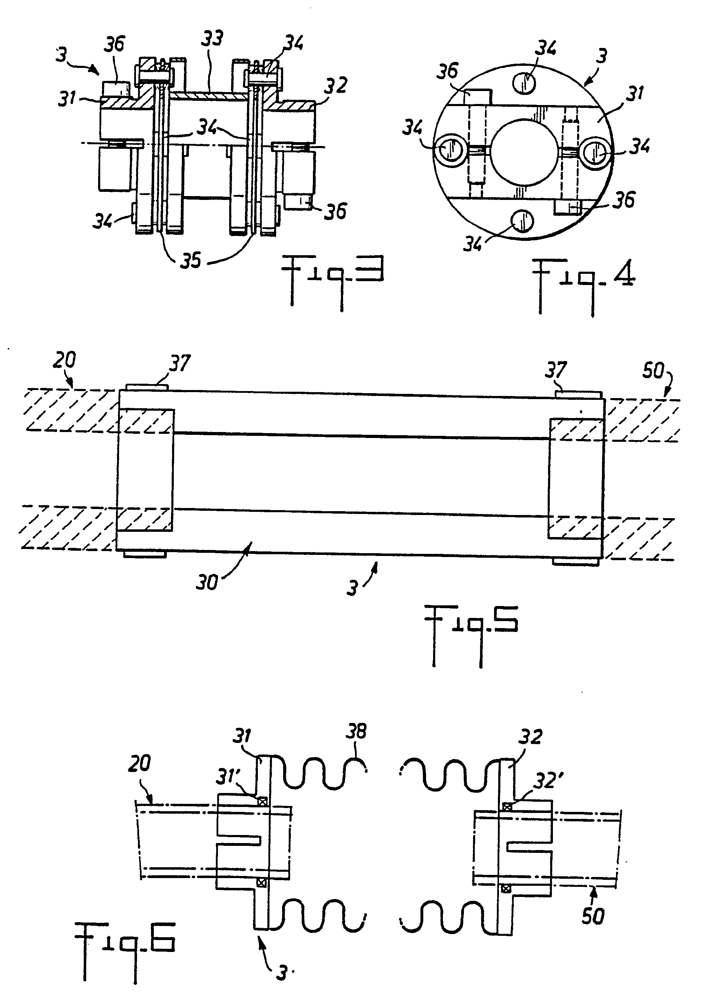

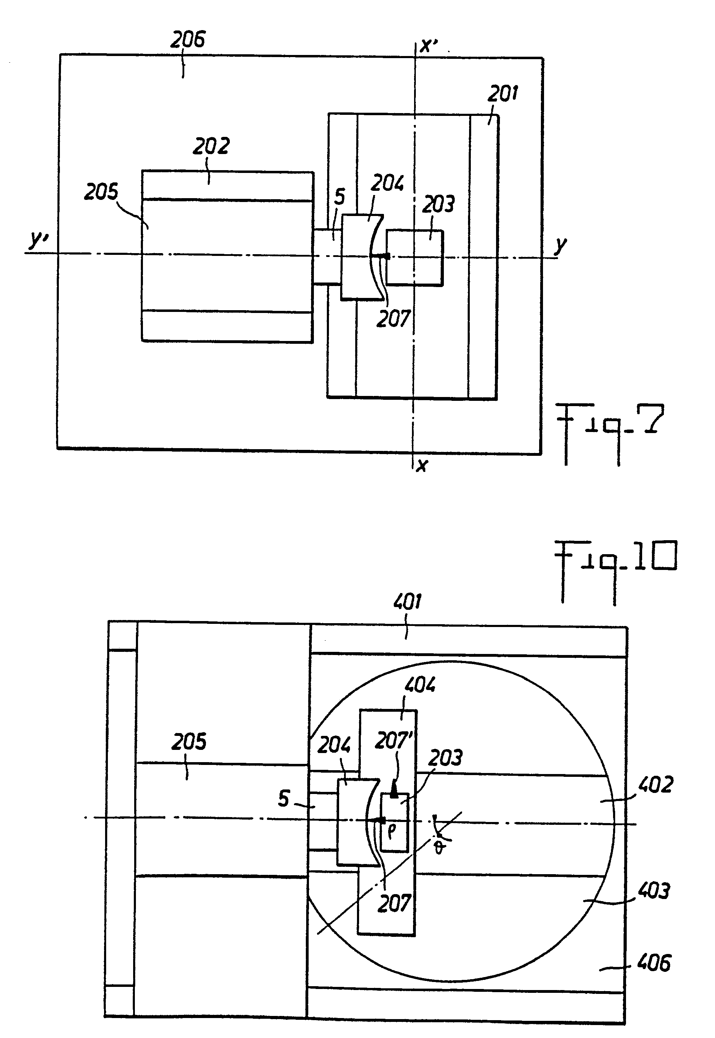

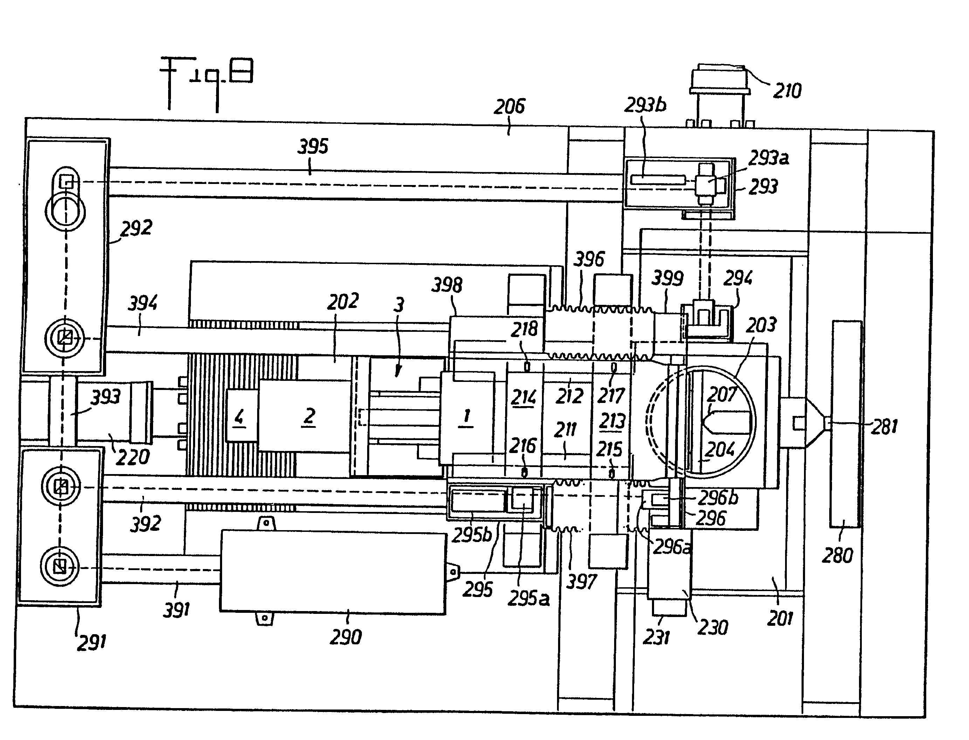

Le dispositif d'accouplement 3 est avantageusement constitué par un tuyau 30 en élastomètre ou autre matière présentant des propriétés élastiques similaires, qui est fixé de façon étanche par des moyens de liaison 37 aux extrémités libres du rotor 20 du moteur 2 et du rotor 50 de la broche 1 (fig 5). Un tel mode d'accouplement garantit une étanchéité au niveau de la liaison entre le moteur 2 et l'arbre de broche 50, sans adjonction de joint supplémentaire tout en assurant de façon pleinement satisfaisante, les fonctions mécaniques susmentionnées.

A titre de variante, le dispositif d'accouplement peut toutefois comprendre un soufflet métallique 38 fixé par pincement sur des brides 31, 32 de raccordement aux extrémités libres du rotor de moteur 2 et de l'arbre de broche 50 (fig 6). L'étanchéité nécessaire dans le cas de l'utilisation d'un plateau à aspiration est assurée par des joints toriques 31' et 32'.

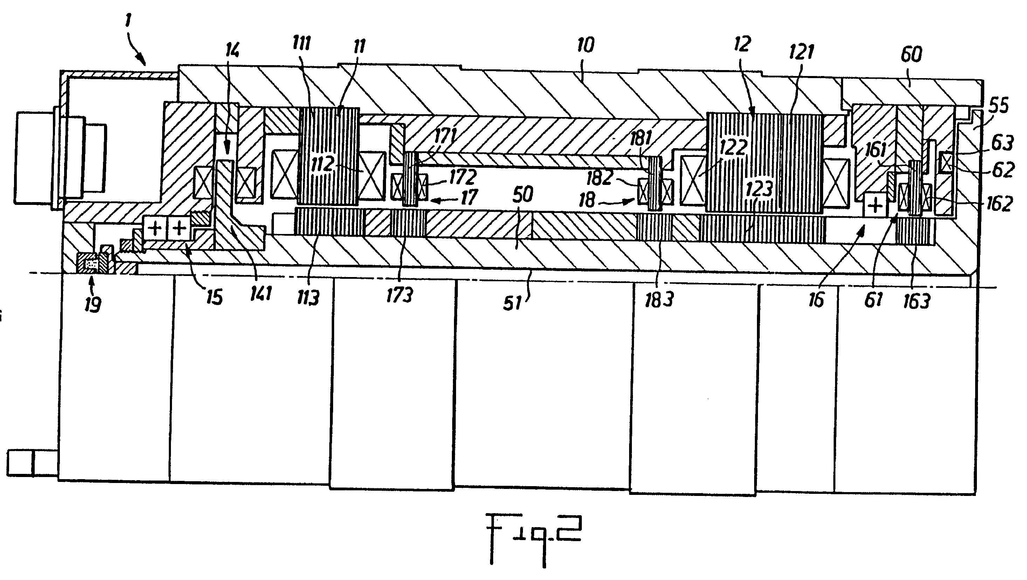

Un autre mode de réalisation de dispositif d'accouplement 3, représenté sur les figures 3 et 4, comprend des lames flexibles 35 fixées par pincement à l'aide d'éléments de liaison 34 entre des brides 31, 32 de raccordement aux extrémités libres du rotor de moteur 2 et de l'arbre de broche 50, et un manchon central 33. Des moyens de liaison 36 assurent la solidarisation entre les brides 31, 32 et les extrémités des rotors 20 et 50.

Dans ces différents modes de réalisation de dispositifs d'accouplement, un conduit 31 est défini axialement à l'intérieur de l'accouplement et assure une continuité entre le conduit 51 du rotor de broche 50 et un conduit 23 formé axialement dans le rotor 20 du moteur 2. Le conduit 31 est réalisé de manière à assurer une continuité de l'étanchéité entre les conduits 23, 31 et 51.

Un boîtier d'aspiration 4 délimitant une chambre de répartition 40 est rapporté à l'arrière du moteur 2 et fixé de façon rigide sur le stator de celui-ci. La chambre 40 communique d'une part avec une pompe à vide, non représentée, par l'intermédiaire d'une tubulure 41 et d'autre part, avec le conduit 23 ménagé dans le rotor 20 du moteur 2. Avec un tel agencement, les fuites les plus importantes vers l'extérieur provenant du circuit d'aspiration constitué par la chambre 40, les conduits 23, 31, 51 et la chambre 52, sont situées au niveau de l'entrefer ménagé entre le rotor 20 du moteur 2 et le stator de ce moteur. Compte tenu de la faible valeur de cet entrefer (de l'ordre de 0,1 mm), les pertes de charge dues à ces fuites sont relativement faibles. Il n'est donc pas nécessaire d'installer un joint à chicanes ou un joint tournant toujours délicats à mettre en oeuvre et qui provoquent systématiquement des vibrations axiales.

Le système d'aspiration selon l'invention, qui assure le pompage dans la chambre 52 du plateau porte-pièce 5 depuis la pompe à vide par l'intermédiaire du rotor de broche 50, de l'accouplement 3 à tuyau élastomère ou à soufflets métalliques, du rotor 20 du moteur 2 et du boîtier d'aspiration 4 garantit que toutes les perturbations mécaniques inévitables dues au pompage, notamment les perturbations dans le sens axial, sont reprises totalement par le moteur 2 et ne sont pas transmises au rotor 50 de la broche, compte tenu de la présente de l'accouplement 3.

L'absence de moteur électrique incorporé entre les paliers radiaux et l'absence de pompage effectué immédiatement à l'arrière du rotor de broche 50 permettent de conserver un rotor de broche 50 compact de faible longueur, qui confère ainsi à la broche une raideur et une stabilité accrues.

On décrira maintenant de façon plus détaillée en référence à la figure 2 la suspension magnétique du rotor de broche 50 à l'intérieur du corps de broche 10.

La suspension magnétique représentée sur la figure 2 comprend des premier et second paliers magnétiques actifs radiaux 11, 12 disposés respectivement à la partie arrière et à la partie avant du corps de broche 10. Chaque palier magnétique radial 11, 12 comprend, de façon connue en soi, un stator formé d'un empilement de tôles 111, 121 et de bobinages 112, 122 et une armature 113, 123 qui est rapportée sur le rotor 50 de la broche. Chaque palier radial 11, 12 est qualifié d'actif car il est associé à une boucle d'asservissement et à au moins un détecteur radial de la position du rotor 50, référencé 17, respectivement 18, 61, disposé au voisinage du palier radial correspondant. Comme cela est connu dans le domaine des paliers magnétiques actifs, les détecteurs radiaux 17, 18, 61 peuvent être du type inductif avec une armature statorique 171, 181, 161 et des enroulements 172, 182, 162 disposés en regard d'une piste annulaire de référence 173, 183, 163 formée sur le rotor 50. On utilise avantageusement pour les détecteurs 17, 18, 61 des détecteurs radiaux à réjection d'harmoniques tels que ceux décrits dans le brevet français 2 214 890.

Compte tenu de l'application de la broche porte-pièce 1 selon l'invention à des machines de très haute précision, il est nécessaire d'effectuer une rectification du rotor de broche 50 afin d'améliorer les tolérances géométriques (concentricité des paliers et détecteurs), mais aussi d'augmenter la circularité des pistes des détecteurs ainsi que celle des paliers.

Pour cela, on peut par exemple, faire tourner dans un premier temps la broche à vide. Les signaux issus des détecteurs représentent alors exactement leurs défauts de circularité. Ces défauts sont enregistrés dans une mémoire et en fonctionnement normal ces défauts sont envoyés dans les boucles d'asservissement pour corriger les défauts des pistes des détecteurs.

Comme on l'a indiqué précédemment, il est important que les pistes de référence des détecteurs radiaux présentent une excellente circularité.

Si l'on désire ne pas utiliser de façon permanente un dispositif électronique constitué des cartes nécessaires à la fabrication des différents harmoniques de correction, on peut n'utiliser ce dispositif que pour faire tourner le rotor avec une grande précision à l'aide de détecteurs provisoires radiaux 17, 18 et axial 19 et usiner les pistes d'au moins un nouveau détecteur radial 61 et d'au moins un nouveau détecteur axial 62 à la précision de rotation du rotor 50. L'usinage terminé, on connecte les nouveaux détecteurs 61, 62 sur les boucles d'asservissement concernées et le dispositif électronique de fabrication d'harmoniques de correction peut être abandonné.

On a représenté sur la figure 2, un détecteur axial 19 et deux détecteurs radiaux 17, 18 qui peuvent servir à commander la butée axiale 14 et les paliers radiaux 11, 12 lors d'une opération d'usinage de la piste de référence 163 d'un nouveau détecteur radial 61 placé au voisinage de l'extrémité frontale du rotor 50, et de la piste de référence 63 d'un nouveau détecteur axial 62 formée sur la face frontale 55 du rotor 50. Après montage des détecteurs 61 et 62 rapportés dans la partie frontale avant 60 du corps de broche 10, le palier radial avant 12 et la butée axiale 14 peuvent être commandés par les détecteurs 61 et 62. Le détecteur axial arrière 19 peut alors être retiré pour dégager le conduit 51 du rotor de broche 50 si l'on utilise un mandrin à aspiration.

La qualité des détecteurs peut également être améliorée même en l'absence totale de dispositif électronique de correction d'harmoniques. Dans ce cas, dans une phase d'essai, on usine les pistes 163 et 63 de nouveaux détecteurs radial et axial 61, 62 qui, en service normal, seront ensuite connectés aux boucles d'asservissement des paliers radial 12 et axial 14 à la place des détecteurs 18 et 19.

Sur la figure 2, les références 15 et 16 désignent des paliers de secours constitués par des roulements à bille qui ne sont pas utilisés en service normal.

D'une manière générale, selon la présente invention, on choisit les fréquences propres d'asservissement comprises entre environ 50 et 80 Hz et de préférence 50 et 60 Hz et on fait tourner la broche porte-pièce à une vitesse inférieure auxdites fréquences propres et de préférence à une vitesse comprise entre environ 25 et 40 tours/seconde. Les boucles d'asservissement présentent une pointe de gain, pour le premier harmonique.

Afin de conserver toute la précision d'usinage, les passes d'usinage sont de préférence réalisées de façon très fine.

On a décrit précédemment en référence aux figures 1 et 2 un mandrin du type à aspiration. Il est également possible, pour certaines applications d'utiliser un mandrin magnétique. Dans ce cas, pour éviter une perturbation du fonctionnement des détecteurs disposés au voisinage du mandrin, on utilise un détecteur axial 62 de type capacitif et non de type iductif comme représenté sur la figure 2.

Par ailleurs, le moteur électrique qui n'est pas interposé entre les paliers radiaux 11, 12, évite toutes les perturbations qui seraient causées par la présence d'un moteur électrique au voisinage immédiat des paliers, à savoir les pertes thermiques, les vibrations et la pollution électrique et magnétique des détecteurs. Il peut cependant être souhaitable de monter sur le corps de broche un dispositif de régulation de température du corps de broche, par exemple par circulation de fluide. En effet, bien que relativement faibles par rapport aux pertes thermiques d'un moteur électrique, les pertes thermiques dans les enroulements des paliers magnétiques ne sont pas toujours négligeables.

On décrira maintenant en référence aux figures 7 à 18 des exemples d'application de la broche porte-pièce 1 selon l'invention à des machines-outils de très haute précision.

Un premier exemple de machine à usiner des surfaces complexes dans un repère cartésien XX', YY' est représenté de façon symbolique sur la figure 7.

Deux glissières 201, 202 dont les axes de déplacement XX' et YY' sont perpendiculaires sont placées sur un support 206, tel qu'un massif de granit, qui est désolidarisé du sol à l'aide d'une suspension pneumatique.

La glissière 201 supporte un plateau tournant 203 sur lequel est placé un outil 207 tandis que la glissière 202 supporte une broche porte-pièce 205 qui peut être conforme à la description faite plus haut de la broche 1. Une pièce à usiner 204 est placée sur le disque porte-pièce 5 qui prolonge la broche 205.

Le plateau tournant 203 permet d'orienter l'outil de telle sorte que ce soit la même partie de l'arête coupante de l'outil qui effectue l'usinage, ce qui permet de s'affranchir des irrégularités géométriques de l'arête.

Les figures 8 et 9 représentent un exemple de réalisation d'une machine telle que celle qui a été symbolisée sur la figure 7.

On voit ainsi des moteurs électriques à courant continu 210, 220 entraînant chacun un système vis-écrou qui assure le déplacement de la glissière 201, 202 respectivement. Les glissières 201, 202 sont pilotées par une commande numérique et leur déplacement est mesuré par un dispositif interférométrique Doppler, connu en soi.

Le dispositif interférométrique comprend essentiellement une source laser 290, des boîtiers 291, 292 comprenant des cubes de renvoi, un boîtier à miroir plan 294 et un boîtier d'interféromètre 293 pour la mesure du déplacement de la glissière 201 de l'outil, deux boîtiers à miroir plan 296, 399 et deux boîtiers d'interféromètre 295, 398 pour la mesure du déplacement de la glissière 202 de la broche, des soufflets 397, 396 de liaison entre les boîtiers d'interféromètre 295, 398 et les boîtiers de miroirs plans 296, 399 et des tubes 391 à 395 de protection des faisceaux laser de mesure. Les boîtiers à miroir plan 294, 296, 399 comprennent chacun, comme le boîtier 296, un miroir plan 296a et des butées de réglage 296b. Les boîtiers d'interféromètre 293, 295, 398 comprennent chacun un interféromètre de mesure 293a, 295a, un récepteur 293b, 295b, ainsi qu'un dispositif de réglage tel que 295c.

Pour que les surfaces usinées soient correctes, il est nécessaire que la broche tourne parfaitement rond mais aussi que le déplacement de la broche s'effectue avec précision, on est ainsi obligé de détecter les mouvements de la glissière porte-broche 202 et d'effectuer une correction en déplaçant le rotor 50 radialement. Cette correction peut atteindre + 150 μm, ce qui est important. Pour que les défauts engendrés par le déplacement de la glissière porte-outil 201 ne s'impriment pas sur la pièce à usiner il est encore nécessaire de pouvoir détecter le mouvement de la glissière 201 au niveau de l'outil pour interagir au niveau du rotor 50 axialement. Cette correction peut atteindre + 150 μm.

La broche porte-pièce 1 permet en outre de compenser des défauts des éléments mécaniques de la machine-outil. Par action sur les boucles d'asservissement de la broche porte-pièce 1 à paliers magnétiques, il est possible de maintenir l'axe de la broche parfaitement positionné malgré les défauts de roulis, tangage ou lacet dûs aux déplacements d'une glissière 201, 202.

Une telle compensation peut être effectuée en temps réel si dans chaque plan d'asservissement des paliers magnétiques radiaux 11, 12 on place deux détecteurs par exemple de type capacitif, 216, 218 respectivement 215, 217 montés sur des consoles 214, 213 solidaires du corps 10 de la broche et qui détectent des variations de distance par rapport à des surfaces de référence plane fixes 211, 212 placées parallèlement à la direction YY' de déplacement de la glissière 212 porte-broche et perpendiculairement aux axes d'asservissement représentés en traits mixtes sur la figure 13. Comme on peut le voir sur cette figure, les surfaces 211, 212 présentent un angle proche de 45° par rapport au plan de support de la broche 1.

La surface plane de référence 211 est commune aux détecteurs 215, 216 tandis que la surface plane de référence 212 est commune aux détecteurs 217, 218. Les surfaces planes de référence 211, 212 sont constituées de préférence par des miroirs métallisés.

Les signaux issus des détecteurs 215 à 218 sont traités et envoyés respectivement dans les boucles d'asservissement des paliers radiaux correspondants pour modifier les tensions de référence qui déterminent la position de l'axe du rotor 50 radialement par rapport aux stators des paliers magnétiques 11, 12.

Si maintenant on considère l'outil 207 placé sur sa glissière 201, pour garantir que la pointe de l'outil 207 reste dans un plan perpendiculaire à l'axe de la broche 1 quand la glissière 201 est activée, il est nécessaire de placer un détecteur 281 dans un plan axial vertical de l'outil 207. Ce détecteur 281 solidaire de la glissière 201 mesure les variations de proximité avec une surface plane de référence 282 préalablement placée perpendiculairement à l'axe de la broche 50 (figures 8, 9 et 14). Le détecteur 281 est de préférence de type capacitif et coopère avec un miroir plan 282 monté dans un support fixe 280.

Le signal issu du détecteur 281 est traité puis envoyé dans la boucle d'asservissement du palier magnétique axial 14 afin de modifier la tension de référence qui définit la position de l'axe du rotor 50 par rapport au corps de broche.

Les figures 15 et 16 montrent un mode de réalisation de l'invention dans lequel la suspension magnétique du rotor 50 de la broche 1 permet de corriger non seulement des défauts de la glissière porte-broche 202, mais également des défauts de roulis, lacet, tangage et de rectitude de la glissière porte-outil 201. Pour cela, on dispose deux détecteurs de type capacitif 281, 283, espacés l'un de l'autre, dans un plan $P_1$ (Fig 16) passant par l'outil 207 et parallèle au plan de base de la glissière 201 et deux détecteurs de type capacitif 285, 286 situés dans un plan $P_2$ (Fig 15) perpendiculaire au plan $P_1$. Les détecteurs 285, 286 sont eux-mêmes situés dans des plans perpendiculaires aux plans $P_1$ et $P_2$ et contenant les détecteurs 281 et 283 respectivement.

Les quatre détecteurs 281, 283, 285, 286 solidaires de la glissière 201 mesurent les variations de proximité par rapport à deux surfaces planes de référence 282, 284 perpendiculaires entre elles et solidaires du support fixe 206. La surface plane 282 coopérant avec les détecteurs 281, 283 et la surface plane 284 coopérant avec les détecteurs 285, 286 sont constituées par des miroirs plans métallisés.

Les signaux délivrés par les détecteurs 281, 283, 285, 286 permettent de déterminer les défauts de la glissière 201 et, par action sur les tensions de référence des boucles d'asservissement des paliers radiaux 11, 12 de la broche porte-pièce 205 permettent de compenser en temps réel ces défauts en modifiant de façon sélective la position du rotor 50 de la broche porte-pièce. Compte tenu du fait que les détecteurs 281 ? 285 et 283, 286 sont situés dans des plans qui ne sont pas ceux des paliers radiaux 11, 12, contrairement au cas des détecteurs 215, 217 et 216, 218 servant à compenser les défauts de la glissière porte-broche 202, il est naturellement nécessaire de procéder, à l'aide d'un calculateur à des opérations de conversion qui élaborent dans les plans des paliers radiaux 11, 12 des signaux de compensation tendant à annuler les signaux d'erreur émis par les détecteurs 281, 283, 285 et 286. D'une manière générale, les signaux délivrés par les détecteurs 281, 283, 285 et 286 sont traités deux à deux pour déterminer la part des défauts qui revient à la translation et celle qui revient à la rotation. Les tensions de référence modifiées appliquées aux boucles d'asservissement des paliers radiaux et du palier axial visent à conserver l'axe de l'outil 207 perpendiculaire au plan tangent au point considéré de la surface à usiner.

Sur la figure 9, les références 230, 231 désignent respectivement le moteur électrique à courant continu d'entraînement en rotation du plateau tournant 203 et une génératrice tachymétrique. Un codeur angulaire est en outre associé au plateau tournant 203.

La figure 10 représente de façon symbolique une machine à usiner les surfaces complexes, de type polaire, qui comprend une broche 205 à axe horizontal pouvant être conforme à la broche 1 décrite plus haut, placée sur une glissière de 401 qui enjambe un plateau tournant 403 à axe vertical sur lequel est placée une glissière 402 d'outil 203. Un plateau support 406, par exemple en granit est désolidarisé du sol par une suspension pneumatique. La figure 10 montre encore une glissière 404 de mise à zéro. La pièce 204 est placée sur le disque porte-pièce 5 de la broche 205 comme dans le mode de réalisation des figures 7 à 9.

Si les déplacements du rotor 50 de la broche 205 dans ses paliers magnétiques sont programmés en fonction de la rotation du plateau tournant 403, il est possible d'obtenir sur la pièce 204 une surface aux formes particulières.

En particulier, si une tension de référence périodique variable est appliquée à la boucle d'asservissement du palier axial 14, l'axe du rotor de la broche 1 se déplace de façon coaxiale. La surface engendrée par le déplacement de la pièce 204 quand la glissière outil 201 est activée dépend des paramètres adoptés.

Ainsi, en considérant que la fréquence d'usinage est l'inverse du temps que met l'outil à parcourir le rayon de la pièce, si la fréquence de la tension de référence est inférieure à la fréquence d'usinage, on obtient des surfaces convexes ou concaves.

Si la fréquence de la tension de référence est inférieure à la fréquence de rotation de la broche mais supérieure à celle d'usinage, on obtient des spirales à amplitude contrôlable pouvant servir d'étalon de rugosité.

Si la fréquence de la tension de référence est égale ou supérieure à la fréquence de rotation de la broche, on obtient des cannelures rayonnantes.

De même, pour amener l'axe du rotor 50 de la broche 205 à être sécant avec l'axe du plateau 403, après un préréglage classique, il est possible d'effectuer un réglage fin en agissant sur la tension de référence des boucles d'asservissement radiales des paliers radiaux 11,12.

D'une façon similaire, pour placer la pointe de l'outil 207 à la hauteur de l'axe de la broche 205, dans le cas d'un usinage cartésien comme dans celui d'un usinage polaire, on utiliser avantageusement les boucles d'asservissement des paliers magnétiques radiaux 11, 12 de la broche 205.

Comme on l'a représenté sur la figure 10, l'outil 207 peut être placé perpendiculairement à la surface à usiner, dans une position frontale, ou au contraire être placé dans une position latérale 207'.

Une machine du type polaire présente une structure d'ensemble plus simple qu'une structure du type cartésien et il n'est pas nécessaire d'utiliser un dispositif interférométrique de mesure comme dans le cas du mode de réalisation des figures 7 à 9. En effet, pendant l'usinage il n'est nécessaire de vérifier que la rotation, tous les autres paramètres dépendant des conditions de réglage. Une génératrice tachymétrique et un codeur angulaire associés à la plate-forme tournante 403 permettent ainsi d'assurer tout le contrôle des opérations d'usinage.

La figure 17 illustre un moyen de correction des défauts de rotation du plateau tournant 403. La surface sphérique 480 formée sur une pièce 408 est centrée sur l'axe 232 du plateau tournant 403 et fixée sur un support fixe. Un capteur de position 407, est placé dans l'axe de l'outil 207 et mesure les variations de proximité par rapport à la surface sphérique 480. Le signal issu du capteur 407 est traité puis envoyé dans la boucle d'asservissement du palier axial 14 de la broche 1 portant la pièce à usiner 204.

On notera que le dispositif de correction des défauts de rotation d'un plateau tournant est aussi applicable à une machine de type cartésien, comme on l'a représenté sur la figure 18. Dans ce cas, pour corriger les défauts de rotation du plateau tournant 203, on utilise une surface sphérique de référence 380 parfaitement centrée sur l'axe du plateau tournant et portée par un support 308 fixé sur le plateau mobile de la glissière 201. Le capteur 507 mesurant les variations de proximité par rapport à la surface sphérique de référence 380 est placé dans l'axe de l'outil 207 et le signal issu du capteur 507 est traité, puis utilisé pour modifier de façon sélective la tension de référence de la boucle d'asservissement du palier axial 14 de la broche 1 portant la pièce à usiner 204.

## Revendications

1. Broche porte-pièce à paliers magnétiques actifs pour machine-outil de très haute précision, comprenant un corps de broche (10) monté sur une glissière (202) de guidage selon une direction prédéterminée (Y'Y), un rotor de broche (50) monté à l'intérieur du corps de broche (10), un mandrin (5) solidaire du rotor de broche (50), des premier et second paliers magnétiques actifs radiaux (11, 12) de support du rotor de broche (50), commandés au moins à partir de détecteurs radiaux (17, 18, 61) de la position du rotor, une butée axiale constituée par un palier magnétique actif axial coopérant avec un disque solidaire du rotor de broche (50), et commandé à partir d'au moins un détecteur axial (62) de la position du rotor, et un moteur électrique (2) d'entraînement en rotation du rotor de broche (50), caractérisée en ce que le moteur électrique (2) est extérieur au corps de broche (10), est disposé à l'arrière du rotor de broche (50) et sensiblement en alignement avec celui-ci, en ce que le moteur extérieur (2) présente un entrefer plus réduit que l'entrefer entre les paliers magnétiques radiaux (11, 12) et le rotor de broche (50), en ce que la vitesse de rotation communiquée au rotor de broche (50) par le moteur extérieur (2), exprimée en tours/seconde, se situe en dehors de la bande passante d'asservissement du système de suspension magnétique (11, 12) exprimée en hertz, en ce qu'un dispositif (3) d'accouplement souple relie l'arbre de sortie (20) du moteur extérieur (2) à la partie arrière du rotor de broche (50) en assurant le filtrage des perturbations mécaniques issues du faux-rond du moteur (2), et en ce que la broche comprend en outre des moyens supplémentaires (211 à 218) de détection des mouvements de la glissière de guidage de broche (202) et des moyens de modification sélective des tensions électriques de référence des boucles d'asservissement du palier axial (14) et des paliers radiaux (11, 12) en fonction des signaux issus desdits moyens supplémentaires de détection (211 à 218), lesdits moyens supplémentaires de détection des mouvements de la glissière (202) sur laquelle est placée la broche porte-pièce (205) comprenant dans le plan d'asservissement de chaque palier radial (11, 12) deux détecteurs (216, 218 ; 215, 217) solidaires du corps de broche (1) qui sont placés en regard de deux surfaces planes de référence (211, 212) disposées parallèlement à la direction (Y'Y) du déplacement de ladite glissière (202), lesdits détecteurs (215 à 218) délivrant des signaux électriques proportionnels aux variations de distance entre lesdits détecteurs (216, 218 ; 215, 217) et lesdites surfaces planes de référence (211, 212) pour commander les moyens de modification sélective en temps réel des tensions de référence des boucles d'asservissement des paliers radiaux (11, 12) de la broche porte-pièce (205) en fonction desdites variations de proximité entre les détecteurs (215 à 218) et les surfaces de référence planes (211, 212).

2. Broche porte-pièce selon la revendication 1, caractérisée en ce que la fréquence propre du système de suspension magnétique (11, 12) est de l'ordre de 50 à 80 Hz, tandis que la vitesse de rotation du rotor de broche (50) est comprise entre environ 25 et 40 tours/seconde.

3. Broche porte-pièce selon l'une des revendications 1 à 2, caractérisée en ce que le moteur extérieur (2) présente un entrefer de l'ordre de 0,1 mm tandis que l'entrefer entre les paliers magnétiques radiaux (11, 12) et le rotor de broche (50) est de l'ordre de 0,3 mm.

4. Broche porte-pièce selon l'une quelconque des revendications 1 à 3, caractérisée en ce qu'elle comprend des premier et second détecteurs radiaux (18, 61) espacés axialement et situés de part et d'autre dudit second palier magnétique radial (12) disposé au voisinage du mandrin porte-pièce (5), en ce que le second détecteur radial (61) est monté de façon amovible entre ledit second palier magnétique radial (12) et le mandrin porte-pièce (5) et en ce que dans une première phase de mise au point le second palier magnétique radial (12) est commandé par le premier détecteur radial (18) pour effectuer sur le rotor de broche (50) une opération de rectification de la piste de référence (163) du second détecteur radial (61) et dans des phases ultérieures d'usinage de pièces supportées par le mandrin porte-pièce (5), le second palier magnétique radial (12) est commandé par le second détecteur radial (61) coopérant avec ladite piste de référence (163).

5. Broche porte-pièce selon l'une quelconque des revendications 1 à 4, caractérisée en ce qu'elle comprend des premier et second détecteurs axiaux (19, 62), le premier détecteur axial (19) disposé à l'arrière de la broche (1) servant à la commande de la butée axiale (14) pour une opération de rectification d'une piste de référence (63) sur une face frontale (55) formée à l'avant de la broche (1), et le second détecteur axial (62) qui coopère avec ladite piste de référence (63) servant à la commande de la butée axiale (14) pour une phase ultérieure d'usinage de pièce.

6. Broche porte-pièce selon l'une quelconque des revendications 1 à 5, caractérisée en ce que le mandrin (5) solidaire du rotor de broche est un plateau à aspiration muni d'orifices d'aspiration (54) répartis sur sa face frontale et en ce que le dispositif d'aspiration (4) associé au plateau à aspiration comprend une pompe à vide, un réservoir tampon d'aspiration (40) disposé à l'arrière du moteur électrique (2) et relié à la pompe à vide, et un conduit (51) d'aspiration prenant naissance à l'intérieur du réservoir tampon (40), s'étendant axialement à l'intérieur de l'arbre (20) du moteur (2), du dispositif d'accouplement (3) et du rotor de broche (50) pour déboucher dans une cavité (52) formée dans le mandrin porte-pièce (3) et avec laquelle sont en communication les orifices d'aspiration (54).

7. Broche porte-pièce selon l'une quelconque des revendications 1 à 6, caractérisée en ce que le dispositif d'accouplement (3) comprend un manchon tubulaire (30) étanche en une matière telle que du caoutchouc ou un élastomère.

8. Broche porte-pièce selon la revendication 1, caractérisée en ce qu'elle comprend un mandrin (5) de type magnétique et en ce que le détecteur axial (62) de la position du rotor situé au voisinage du mandrin (5) est de type capacitif.

9. Dispositif de correction des défauts des mouvements de glissières d'une machine-outil utilisée dans un repère cartésien et comprenant des première et seconde glissières (201, 202) dont les axes de déplacement sont orientés selon deux directions perpendiculaires XX' et YY', un plateau tournant (203) placé sur la première glissière (201), et une broche porte-pièce (205) placée sur la seconde glissière (202), et des dispositifs de mesure des déplacements des première et seconde glissières (201, 202), caractérisé en ce qu'il comprend une broche porte-pièce selon l'une quelconque des revendications 1 à 8, des moyens supplémentaires (281, 282 ; 211 à 218) de détection des mouvements de la première glissière (201) de guidage du plateau tournant, lesdits moyens supplémentaires de détection des mouvements de la première glissière (201) sur laquelle est placé le plateau tournant (203) comprenant un détecteur mobile (281) placé dans un plan vertical contenant l'axe de l'outil (207) et solidaire de la première glissière (201), une surface plane de référence (282) placée perpendiculairement à l'axe de la broche porte-pièce (205) et des moyens de détection des variations de l'espacement entre le détecteur (281) et la surface plane de référence (282), et les moyens de modification sélective en temps réel de la tension électrique de référence de la boucle d'asservissement du palier axial (14) étant commandés en fonction desdites variations de proximité entre ledit détecteur mobile (281) solidaire de la première glissière (201) et ladite surface de référence plane (282).

10. Dispositif selon la revendication 9, caractérisé en ce que lesdits moyens supplémentaires de détection des mouvements de la seconde glissière (202) sur laquelle est placée la broche porte-pièce (205) comprennent dans chaque plan d'asservissement d'un palier radial (11, 12) deux détecteurs (216, 218; 215, 217) solidaires du corps de broche (1) qui sont placés chacun en regard d'une surface plane de référence (211, 212) disposée parallèlement à la direction (Y'Y) de déplacement de la seconde glissière (202) et perpendiculairement à l'autre surface plane de référence (212, 211) placée en regard de l'autre détecteur (218, 216 ; 217, 215) disposé dans le même plan d'asservissement d'un palier radial (11, 12).

11. Dispositif selon la revendication 9 ou la revendication 10, caractérisé en ce que lesdits moyens supplémentaires de détection des mouvements de la première glissière (201) sur laquelle est placé le plateau tournant (203) comprennent un premier groupe de deux détecteurs (281, 283), espacés l'un de l'autre, dans un plan P1, passant par l'outil (207) et parallèle au plan de base de la première glissière (201), et un second groupe de deux détecteurs (285, 286) situés dans un plan (P2) perpendiculaire au plan (P1), les premiers détecteurs (281, 285) et les seconds détecteurs (283, 286) des premier et second groupes de détecteurs étant disposés dans des plans (P3, P4) perpendiculaires auxdits plans (P1 et P2) et au plan de base de la première glissière (201) ; et des première et seconde surfaces planes de référence (282, 284) fixes perpendiculaires entre elles et à l'axe de la broche porte-pièce (205) ; des moyens de traitement des signaux issus des premier et second groupes de deux détecteurs (281, 283 ; 285, 286) et représentant les variations des espacements entre chaque détecteurs (281, 283, 285, 286) et la surface plane de référence (282 ou 284) située en regard de celui-ci, et des moyens de modification sélective en temps réel des tensions électriques de référence des boucles d'asservissement des paliers radiaux (11, 12) et du palier axial (14), commandés en fonction des signaux délivrés par lesdits moyens de traitement.

12. Dispositif selon l'une quelconque des revendications 9 à 11, caractérisé en ce qu'il comprend en outre une surface de référence (380) deforme sphérique centrée sur l'axe du plateau tournant (203) et portée par un support (308) fixé sur ladite première glissière (201), un capteur de proximité (507) placé dans l'axe de l'outil (207), des moyens de détection des variations de proximité entre le capteur (507) et la surface de référence sphérique (380) et des moyens de modification en temps réel de la tension de référence de la boucle d'asservissement du palier axial (14) de la broche porte-pièce (205) en fonction desdites variations de proximité entre le capteur (507) et la surface de référence sphérique (380).

13. Dispositif de correction des défauts de rotation du plateau tournant d'une machine outil utilisée en coordonnées polaires, comprenant une première glissière de réglage (401), qui enjambe un plateau tournant (403) à axe vertical sur lequel est placée une seconde glissière (402) de réglage d'un support d'outil (203) et une broche porte-pièce (205) placée sur la première glissière de réglage (401), caractérisé en ce qu'il comprend une broche porte-pièce (205) réalisée selon l'une quelconque des revendications 1 à 8, et en ce qu'il comprend en outre une surface de référence (480) de forme sphérique centrée sur l'axe du plateau tournant (403) et placée sur un support fixe solidaire de la table (406), un capteur de proximité (407) placé dans l'axe de l'outil (207), des moyens de détection des variations de proximité entre le capteur (407) et la surface de référence sphérique (480) et des moyens de modification en temps réel de la tension de référence de la boucle d'asservissement du palier axial (14) de la broche porte-pièce (205) en fonction desdites variations de proximité entre le capteur (407) et la surface de référence sphérique (480).

14. Dispositif selon l'une quelconque des revendications 1 à 13, caractérisé en ce que les surfaces de référence planes ou sphériques (211, 212, 282, 284, 380, 480) sont constituées par des miroirs métallisés et les capteurs de proximité (215 à 218, 281, 283, 285, 286, 507, 407) sont de type capacitif.

**Ansprüche**

1. Werkstückträger-Spindal mit aktiv magnetisch geführten Lagern für eine hochpräzise Werkzeugmaschine mit einem auf einer Gleitbahn (202) in einer vorgegebenen Richtung (Y'Y) angebrachten Spindelgehäuse (10), einem im Innern des Spindelgehäuses angebrachten Spindelrotor (50), einem mit dem Spindelrotor (50) einteiligen Spannfutter (5), ersten und zweiten aktiv magnetisch geführten Radiallagern (11, 12) zum Abstützen des Spindelrotors (50), die mindestens von zur Lage des Rotors radialen Fühlern (17, 18, 61) gesteuert werden, einem von einem aktiv magnetisch geführten Axiallager gebildeten axialen Anschlag, der mit einer mit dem Spindelrotor (50) einteiligen Scheibe zusammenarbeitet und von wenigstens einem zur lage des Rotors axialen Fühler (62) gesteuert wird, und einem AntriebsElektromotor (2) zum Drehen des Spindelrotors (50), dadurch **gekennzeichnet**, daß der Elektromotor (2) außerhalb des Spindelgehäuses (10) hinter dem Spindelrotor (50) angeordnet und mit ihm genau fluchtend ist, daß der äußere Motor (2) einen geringeren Luftspalt als den Luftspalt zwischen den magnetischen Radiallagern (11, 12) und dem Spindelrotor (50) aufweist, daß die auf den Spindelrotor (50) vom äußeren Motor (2) übertragene Drehgeschwindigkeit in Umdrehungen/sec außerhalb der Bandbreite der Steuerung des magnetischen Haltesystems (11, 12) in Hertz liegt, daß eine elastische Kupplungseinrichtung (3) die Ausgangswelle (20) des äußeren Motors (2) mit dem hinteren Abschnitt des Spindelrotors (50) verbindet, wobei sie das Filtern der mechanischen, von Rundlauffehlern des Motors (2) abgeleiteten Störungen gewährleistet, und daß die Spindel außerdem Hilfsmittel (211-218) zum Erfassen der Bewegungen der Spindel-Gleitbahn (202) und abstimmungsscharfe Änderungsmittel für die elektrischen Bezugsspannungen der Regelkreise des Axiallagers (14) und der Radiallager (11, 12) in Abhängigkeit von den von den Hilfsmitteln (211-218) zum Erfassen abgeleiteten Signalen aufweist, wobei diese Hilfsmittel zum Erfassen der Bewegungen der Gleitbahn (202), auf der die Werkstückträger-Spindel (205) angeordnet ist, in der Steuerungsebene jedes Radiallagers (11, 12) zwei mit dem Spindelgehäuse (1) einteilige Fühler (216, 218 ; 215, 217) enthalten, die im Hinblick auf die beiden ebenen Bezugsflächen (211, 212) parallel zur Richtung (Y'Y) der Versetzung der Gleitbahn (202) angeordnet sind, wobei die Fühler (215-218) elektrische Signale proportional zu den Abstandsänderungen zwischen den Fühlern (216, 218 ; 215, 217) und den ebenen Bezugsflächen (211, 212) geben, um in Echtzeit die Mittel zur abstimmungsscharfen Änderung für die Bezugsspannungen der Regelkreise der Radiallager (11, 12) der Werkstückträger-Spindel (205) in Abhängigkeit von den Distanzänderungen zwischen den Fühlern (215-218) und den ebenen Bezugsflächen (211, 212) zu steuern.

2. Werkstückträger-Spindel nach Anspruch 1, dadurch **gekennzeichnet**, daß die Eigenfrequenz des magnetischen Haltesystems (11, 12) in der Größenordnung von 50-80 Hz liegt, während die Drehgeschwindigkeit des Spindelrotors (50) zwischen etwa 25 und 40 Umdrehungen/sec beträgt.

3. Werkstückträger-Spindel nach Anspruch 1 oder 2, dadurch **gekennzeichnet**, daß der äußere Motor (2) einen Luftspalt in der Größenordnung von 0,1 mm aufweist, während der Luftspalt zwischen den magnetischen Radiallagern (11, 12) und dem Spindelrotor (50) die Größenordnung von 0,3 mm hat.

4. Werkstückträger-Spindel nach einem der Ansprüche 1 bis 3, dadurch **gekennzeichnet**, daß sie einen ersten und einen zweiten radialen Fühler (18, 61) in axialen Abstand aufweist, die auf beiden Seiten des zweiten magnetischen Radiallagers (12) in der Nähe Werkstückträger-Spannfutters (5) liegen, daß der zweite radiale Fühler (61) unbeweglich zwischen dem zweiten magnetischen Radiallager (12) und dem Werkstückträger-Spannfutter (5) angebracht ist und daß in einer ersten Schaltungsphase das zweite magnetische Radiallager (12) durch den ersten radialen Fühler (18) gesteuert wird, um am Spindelrotor (50) eine Berichtigungsbewegung der Bezugsspur (163) des zweiten radialen Fühlers (61) zu bewirken, und in späteren Betriebsphasen von Werkstücken, die durch das Werkstückträger-Spannfutter (5) gehalten werden, das zweite magnetische Radiallager (12) durch den zweiten radialen Fühler (61) gesteuert wird, der mit der Bezugsspur (163) zusammenarbeitet.

5. Werkstückträger-Spindel nach einem der Ansprüche 1 bis 4, dadurch **gekennzeichnet**, daß sie erste und zweite axiale Fühler (19, 62) aufweist, wobei der erste axiale am hinteren Teil der Spindel (1) angeordnete Fühler (19) zum Steuern des axialen Anschlags (14) für eine Berichtigungsbewegung einer Bezugsspur (63) an einer Stirnfläche (55) dient, die am vorderen Abschnitt der Spindel (1) ausgebildet ist, und der zweite axiale Fühler (62), der mit der Bezugsspur (63) zusammenwirkt, zum Steuern des axialen Anschlags (14) für eine spätere Werkstück-Betriebsphase dient.

6. Werkstückträger-Spindel nach einem der Ansprüche 1 bis 5, dadurch **gekennzeichnet**, daß das mit dem Spindelrotor einteilige Spannfutter (5) eine Ansaugplatte mit an der Stirnseite verteilten Ansaugöffnungen (54) und daß die mit der Ansaugplatte verbundene Ansaugeinrichtung (4) eine Vakuumpumpe, einen hinter dem Elektromotor (2) gelegenen und mit der Vakuumpumpe verbundenen Ansaugspeicherbehälter (40) und eine Ansaugleitung (51) aufweist, die im Innern des Speicherbehälters (40) ihren Anfang nimmt, sich axial im Innern der Welle (20) des Motors (2), der Kupplungseinrichtung (3) und des Spindelrotors (50) erstreckt, um in einen Hohlraum (52) zu münden, der im Werkstückträger-Spannfutter (3) gebildet wird und mit dem die Ansaugöffnungen (54) in Verbindung stehen.

7. Werkstückträger-Spindel nach einem der Ansprüche 1 bis 6, dadurch **gekennzeichnet**, daß die Kupplungseinrichtung (3) eine rohrförmige dichte Muffe (30) aus einem Material wie Kautschuk oder einem Elastomer aufweist.

8. Werstückträger-Spindel nach Anspruch 1, dadurch **gekennzeichnet**, daß sie ein magnetisches Spannfutter (5) aufweist und daß der axiale, in der Nähe des Spannfutters (5) gelegene Fühler (62) für die Stellung des Rotors von kapazitiver Art ist.

9. Vorrichtung zur Berichtigung von Fehlern der Gleitbahn-Bewegungen einer Werkzeugmaschine, die mit kartesischen Koordinaten arbeitet, mit ersten und zweiten Gleitbahnen (201, 202), deren Versetzungsachsen gemäß den beiden zueinander senkrecht stehenden Koordinaten XX' und YY' ausgerichtet sind, einer auf der ersten Gleitbahn (201) angeordneten Drehscheibe (203), einer auf der zweiten Gleitbahn (202) angeordneten Werkstückträger-Spindel (205) und Meßeinrichtungen für die Versetzungen der ersten und zweiten Gleitbahn (201, 202), dadurch **gekennzeichnet**, daß sie eine Werkstückträger-Spindel nach einem der Ansprüche 1 bis 8 aufweist, Hilfsmittel (281, 282 ; 211 bis 218) zum Erfassen der Bewegungen der ersten Führungs-Gleitbahn (201) der Drehscheibe, wobei diese Hilfsmittel zum Erfassen der Bewegungen der ersten Gleitbahn (201), auf der die Drehscheibe (203) angebracht ist, einen beweglichen Fühler (281) aufweisen, der in einer Vertikalebene angeordnet ist, die die Achse des Werkzeugs (207) enthält und einteilig mit der ersten Gleitbahn (201) ist, eine ebene Bezugsfläche (282), die senkrecht zur Achse der Werkstückträger-Spindel (205) angeordnet ist, und Mittel zum Erfassen von Änderungen des Abstands zwischen dem Fühler (201) und der ebenen Bezugsfläche (282) und daß die Mittel für eine abstimmungsscharfe Änderung der elektrischen Bezugsspannung des Regelkreises des Axiallagers (14) in Echtzeit in Abhängigkeit dieser Distanzänderungen zwischen dem mit der ersten Gleitbahn (201) einteiligen beweglichen Fühler (281) und der ebenen Bezugsfläche (282) gesteuert werden.

10. Vorrichtung nach Anspruch 9, dadurch **gekennzeichnet**, daß die Hilfsmittel zum Erfassen der Bewegungen der zweiten Gleitbahn (202), auf der die Werkstückträger-Spindel (205) angebracht ist, in jeder Steuerebene eines Radiallagers (11, 12) zwei Fühler (216, 218 ; 215, 217) einteilig mit dem Spindelgehäuse (1) aufweisen, die jeweils im Hinblick auf eine parallel in der Versetzungsrichtung (Y'Y) der zweiten Gleitbahn (202) gesetzte ebene Bezugsfläche (211, 212) und senkrecht zur anderen ebenen Bezugsfläche (212, 211) im Hinblick auf den andern in dieselbe Steuerebene eines Radiallagers (11, 12) gesetzten Fühler (218, 216 ; 217, 215) angeordnet sind.

11. Vorrichtung nach Anspruch 9 oder 10, dadurch **gekennzeichnet**, daß die Hilfsmittel zum Erfassen der Bewegungen der ersten Gleitbahn (201), auf der die Drehscheibe (203) angebracht ist, eine erste Gruppe von zwei Fühlern (281, 283) im Abstand voneinander in einer Ebene (P1) aufweisen, die durch das Werkzeug (207) und parallel zur Basisebene der ersten Gleitbahn (201) verläuft, und eine zweite Gruppe von zwei Fühlern (285, 286) in einer Ebene (P2) senkrecht zur Ebene (P1), wobei die ersten Fühler (281, 285) und die zweiten Fühler (283, 286) der ersten und zweiten Fühlergruppe in den Ebenen (P3, P4) senkrecht zu den Ebenen (P1 und P2) und der Basisebene der ersten Gleitbahn (201) angeordnet sind ; und die erste und zweite ebene Bezugsfläche (282, 284) fest senkrecht zwischen ihnen und der der Achse der Werkstückträger-Spindel (205) ist; Bearbeitungsmittel von den Signalen der ersten und zweiten Gruppe der Beiden Fühler (281, 283 ; 285, 286) abgeleitet werden und die Änderungen in den Abständen zwischen jedem Fühler (281, 283, 285, 286) und der im Hinblick auf diesen vorgesehenen ebenen Bezugsfläche (282 oder 284) bilden, und Mittel zur abstimmungsscharfen Änderung der elektrischen Bezugsspannungen von Regelkreisen der Radiallager (11, 12) und des Axiallagers (14) in Echtzeit, die in Abhängigkeit der gegebenen Signale durch diese Bewegungsmittel gesteuert werden.

12. Vorrichtung nach einem der Ansprüche 9 bis 11, dadurch **gekennzeichnet**, daß sie außerdem eine Bezugsfläche (380) von kugeliger Gestalt aufweist, die auf der Achse der Drehscheibe (203) zentriert ist und von einer Stütze (308) getragen wird, die auf der ersten Gleitbahn (201) befestigt ist, einen in der Achse des Werkzeugs (207) angebrachten Distanzfühler (507), Mittel zum Erfassen von Distanzänderungen zwischen dem Fühler (507) und der kugelförmigen Bezugsfläche (380) und Änderungsmittel der Bezugsspannung des Regelkreises des Axiallagers (14) der Werk-Stückträger-Spindel (205) in Echtzeit in Abhängigkeit der Distanzänderungen zwischen dem Fühler (507) un der kugelförmigen Bezugsfläche (380).

13. Vorrichtung zur Berichtigung von Fehlern in der Rotation der Drehscheibe einer in Polarkoordinaten arbeitenden Werkzeugmaschine mit einer ersten gesteuerten Gleitbahn (401), die eine Drescheibe (403) mit einer senkrechten Achse überspannt, auf der eine zweite gesteuerte Gleitbahn (402) eines Werkzeugsupports angeordnet und eine Werkstückträger-Spindel (205) auf der ersten gesteuerten Gleitbahn (401) angeordnet ist, dadurch **gekennzeichnet**, daß sie eine Werkstückträger-Spindel (205) gemäß einem der Ansprüche 1 bis 8 aufweist und daß sie außerdem eine Bezugsfläche (480) in kugelförmiger Gestalt aufweist, die auf der Achse der Drehscheibe (403) zentriert und auf einem festen, mit dem Tisch (406) einteiligen Support angebracht ist, einen auf der Achse des Werkzeugs (207) vorgesehenen Distanzfühler (407), Mittel zum Erfassen von Distanzänderungen zwischen dem Fühler (407) und der kugelförmigen Bezugsfläche (480) und Änderungsmittel der Bezugsspannung des Regelkreises des Axiallagers (14) der Werkstückträger-Spindel (205) in Echtzeit in Abhängigkeit von den Distanzänderungen zwischen dem Fühler (407) und der kugelförmigen Bezugsfläche (480).

14. Vorrichtung nach einem der Ansprüche 1 bis 13, dadurch **gekennzeichnet**, daß die ebenen oder kugelförmigen Bezugsflächen (211, 212, 282, 284, 380, 480) durch metallisierte Spiegel gebildet werden und die Distanzfühler (215 bis 218, 281, 283, 285, 286, 507, 407) von kapazitiver Art sind.

## Claims

1. Workpiece-carrier spindle assembly having active magnetic bearings for a very high precision machine tool, comprising a stator (10) mounted on a slide (202) for guidance along a predetermined direction (Y'Y), a spindle (50) mounted inside the stator (10), a chuck (5) fixed to the spindle (50), first and second radial active bearings (11, 12) supporting the spindle (50), controlled from radial detectors (17, 18, 61) for detecting the position of the rotor, an axial abutment constituted by an axial active magnetic bearing cooperating with a disk fixed to the spindle (50) and controlled from at least one axial detector (62) for detecting the position of the spindle, and an electric motor (2) for rotating the spindle (50), characterized in that the electric motor (2) is external to the spindle assembly stator (10) is disposed behind the spindle (50) and substantially in alignment therewith, in that the external motor (2) has a smaller air gap than the air gap between the radial magnetic bearings (11, 12) and the spindle (50), in that the rotary drive communicated to the spindle (50) by the external motor (2) expressed in revolutions per second, lies outside the servo-control passband of the magnetic suspension system (11, 12) expressed in hertz, in that a flexible coupling device (3) connects the outlet shaft (20) of the external motor (2) to the rear portion of the spindle (50) while filtering mechanical disturbances due to the eccentricity of the motor (2), and in that the spindle assembly further includes additional means (211 to 218) for detecting movements of the spindle assembly guide slide (202) and means for selectively modifying the electrical reference voltages of the servo-control loops of the axial bearing (14) and of the radial bearings (11, 12) as a function of the signals from said additional detection means (211 to 218), said additional means for detecting movements of the slide (202) on which the workpiece-carrier spindle assembly (205) is placed including two detectors (216, 218; 215, 217) in the servo-control plane of each of the radial bearings (11, 12), said detectors being fixed to the spindle assembly stator and facing two plane reference surfaces (211, 212) disposed parallel to the displacement direction (Y,Y') of said slide (202), said detectors (215 to 218) delivering electrical signals proportional to variations in the distances between said detectors (216, 218 ; 215, 217) and said plane reference surfaces (211, 212) in order to control in real time the means for selectively modifying the reference voltages of the servo-control loops of the radial bearings (11, 12) of the workpiece-carrier spindle (205) assembly as a function of said proximity variations between the detectors (215 to 218) and the plane reference surfaces (211, 212).

2. Workpiece-carrier spindle assembly according to claim 1, characterized in that the natural frequency of the magnetic suspension system (11, 12) is about 50 Hz to 80 Hz, whereas the speed of rotation of the spindle (50) lies between about 25 and 40 revs/sec.

3. Workpiece-carrier spindle assembly according to one of claims 1 to 2, characterized in that the external motor (12) has an air gap of about 0.1 mm, whereas the air gap between the radial magnetic bearings (11, 12) and the spindle (50) is about 3 mm

4. Workpiece-carrier spindle assembly according to any one of claims 1 to 3, characterized in that it comprises first and second axially spaced-apart radial detectors (18, 61) situated on either side of said second radial magnetic bearing (12) disposed in the vicinity of the workpiece-carrier chuck (5), in that the second radial detector (61) is removably mounted between said second radial magnetic bearing (12) and the workpiece-carrier chuck (5), and in that during an initial setting up stage, the second radial magnetic bearing (12) is controlled by the first radial detector (18) in order to perform an operation on the spindle (50) of rectifying the reference track (163) of the second radial detector (61), and that during subsequent stages of machining workpieces supported by the workpiece-carrier chuck (5), the second radial magnetic bearing (12) is controlled by the second radial detector (61) co-operating with said reference track (163).

5. Workpiece-carrier spindle assembly according to any one of claims 1 to 4, characterized in that it comprises first and second axial detectors (19, 62), with the first axial detector (19) being disposed at the rear of the spindle assembly (1) and serving to control the axial abutment (14) during an operation of rectifying a reference track (63) on a front face (55) formed at the front of the spindle assembly (1), with the second axial detector (62) which co-operates with said reference track (63) serving to control the axial abutment (14) during a subsequent stage of machining a workpiece.

6. Workpiece-carrier spindle assembly according to any one of claims 1 to 5, characterized in that the chuck (5) fixed to the sensor is a suction plate provided with suction orifices (54) distributed over its front face, and in that the suction device (4) associated with the suction plate comprises a vacuum pump, a buffer suction chamber (40), disposed behind the electric motor (2) and connected to the vacuum pump, and a suction duct (51) beginning inside the buffer chamber (40), extending axially inside the shaft (20) of the motor (2), inside the coupling device (3), and inside the spindle (50) in order to open out into a cavity (52) formed in the workpiece-carrier chuck (3), which cavity is in communication with the suction orifices (54).

7. Workpiece-carrier spindle assembly according to any one of claims 1 to 6, characterized in that the coupling device (3) comprises an airtight tubular sleeve (30) made of a material such as rubber or an elastomer.

8. Workpiece-carrier spindle assembly according to claim 1, characterized in that it comprises a magnetic type of chuck (5), and in that the axial detector (62) for detecting the position of the spindle and situated in the vicinity of the chuck (5) is of the capacitive type.

9. Device for correcting defects in the movements of the slides in a machine tool used in a cartesian frame of reference and including first and second slides (201, 202) whose displacement axes are oriented along two perpendicular directions XX' and YY', a turntable (203) placed on the first slide (201), a workpiece-carrier spindle assembly (205) placed on the second slide (202), and devices for measuring the displacements of the first and second slides (201, 202), characterized in that it comprises a workpiece-carrier spindle assembly according to any one of claims 1 to 8, additional means (281, 282 ; 211 to 218) for detecting the movements of the first slide (201), for guiding the turntable, said additional means for detecting the movements of the first slide (201) on which the turntable (203) is placed comprising a moving detector (281) placed in a vertical plane containing the axis of the tool (207) and fixed to the first slide (201), a plane reference surface (282) placed perpendicularly to the axis of the workpiece-carrier spindle assembly (205), and means for detecting variations in the space between the detector (281) and the plane reference surface (282), with the means for selectively modifying in real time the electrical reference voltage of the servo-control loop of the axial bearing (14) being controlled as a function of said proximity variations between said moving detector (281) fixed to the first slide (201) and said plane reference surface (282).

10. Device according to claim 9, characterized in that said additional means for detecting movements of the second slide (202) on which the workpiece-carrier spindle assembly (205) is placed comprise two detectors (216, 218 ; 215, 217) in the servo-control plane of each of the radial bearings (11, 12) and fixed to the spindle assembly stator (1), each of said detectors facing a plane reference surface (211, 212) disposed parallel to the displacement direction (Y'Y) of the second slide (202) and perpendicular to the other plane reference surface (212, 211) placed facing the other detector (218, 216 ; 217, 215) disposed in the same servo-control plane of a given radial bearing (11, 12).

11. Device according to claim 9 or claim 10, characterized in that said additional means for detecting the movements of the first slide (201) on which the turntable (203) is placed comprise a first group of two detectors (281, 283) which are spaced apart from each other in a plane P1 passing through the tool (207) and parallel to the base plane of the first slide (201),and a second group of two detectors (285, 286) situated in a plane (P2) perpendicular to said plane (P1), the first detectors (281, 285) and the second detectors (283, 286) of the first and second groups of detectors being disposed in planes (P3, P4) perpendicular to said planes (P1 and P2) and to the base plane of the first slide (201) ; and first and second plane reference surfaces (282, 284) fixed perpendicularly to each other and to the axis of the workpiece-carrier spindle assembly (205) ; processor means for processing the signals coming from the first and second groups of two detectors (281, 283 ; 285, 286) and representing variations in the gaps between each detector (281, 283, 285, 286) and the plane reference surface (282 or 284) which it faces, and means for selectively modifying in real time the electrical reference voltages of the servo-control loops of the radial bearings (11, 12) and of the axial bearing (14), which are controlled as a function of the signals delivered by said processor means.

12. Device according to any one of claims 9 to 11, characterized in that it further comprises a spherical reference surface (380) centered on the axis of the turntable (203) and carried by a support (308) fixed to said first slide (201), a proximity sensor (507) placed on the axis of the tool (207), means for detecting proximity variations between the sensor (507) and the spherical reference surface (380), and means for modifying in real time the reference voltage of the servo-control loop of the axial bearing (14) of the workpiece-carrier spindle assembly (205) as a function of said proximity variations between the sensor (507) and the spherical reference surface (380).

13. Device for correcting eccentricity defects in the turntable of a machine tool used with polar co-ordinates, the machine tool comprising a first adjustment slide (401) extending over a vertical axis turntable (403) on which a second adjustment slide (402) is placed for supporting a tool (203), and a workpiece-carrier spindle assembly (205) placed on said first adjustment slide (401), characterized in that it comprises a workpiece-carrier spindle assembly (205) according to any one of claims 1 to 8, and in that it further comprises a spherical reference surface (480) centered on the axis of the turntable (403) and placed on a fixed support fixed to the base (406) carrying the machine tool, a proximity sensor (407) placed on the axis of the tool (207), means for detecting proximity variations between the sensor (407) and the spherical reference surface (480), and means for modifying in real time the reference voltage of the servo-control loop of the axial bearing (14) of the workpiece-carrier spindle assembly (205) as a function of said proximity variations between the sensor (407) and the spherical reference surface (480).

14. Device according to any one of claims 1 to 13, characterized in that the plane or spherical reference surfaces (211, 212, 282, 284, 380, 480) are constituted by metallized mirrors and the proximity sensors (215 to 218, 281, 283, 285, 286, 507, 407) are of the capacitive type.

Fig. 1

Fig.2

17

Fig.3

Fig.4

Fig.5

Fig.6

Fig-7

Fig.10

Fig.8

Fig.9

EP 0 290 546 B1

Fig. 11

EP 0 290 546 B1

Fig.12

EP 0 290 546 B1

Fig.13

Fig.17

Fig.14

24

Fig.15

Fig.16

Fig.18